# DEMANDE DE BREVET EUROPEEN

(11) **EP 0 724 942 A1**
(43) Date de publication de la demande: **07.08.1996**
(21) Numéro de dépôt: 96400246.3
(22) Date de dépôt: 06.02.1996
(51) Int. Cl.: B29C 43/18, B29C 43/40, B29C 45/14, B29C 45/16, B29C 70/76

(54) **Procédé de réalisation de pièces composites en matière plastique comportant un revêtement de surface, moules pour sa mise en oeuvre et pièces composites ainsi obtenues**

(30) Priorité: 06.02.1995 FR 9501333
(71) Demandeur: COMPAGNIE PLASTIC OMNIUM, F-69007 Lyon (FR)
(72) Inventeur: Uytterhaeghe, Luc, F-01100 Oyonnax (FR); Gille, Denis, F-01810 Bellignat (FR)
(74) Mandataire: Nony, Michel

(57) **Abrégé**

L'invention est relative à un procédé de réalisation d'une pièce composite en matière plastique comportant un revêtement sur une de ses faces.

On place, entre les deux parties d'un moule ouvert, une feuille de revêtement (3) et de la matière plastique à l'état fondu (12) d'un côté de cette feuille de revêtement en quantité suffisante pour remplir le moule, sur la feuille de revêtement (3) ou sur l'une des parties du moule, alors que ce dernier est ouvert, puis que l'on ferme le moule, et que la partie du moule située en face de la feuille de revêtement comporte des cavités telles que, lorsque la matière plastique remplit le moule, la feuille de revêtement se déchire au droit desdites cavités en y laissant pénétrer la matière plastique fondue, laquelle se solidifie dans lesdites cavités en formant des protubérances (13) qui traversent la feuille de revêtement.

## Description

La présente invention concerne un procédé de réalisation de pièces composites en matière plastique comportant un revêtement de surface, des moules pour la mise en oeuvre de ce procédé, et les pièces composites ainsi obtenues.

Dans de nombreux domaines, on utilise des pièces revêtues d'un matériau décoratif sur leur face visible.

Par exemple, dans l'industrie automobile, les panneaux de portes, les tableaux arrière, les planches de bord, ou les consoles qui équipent les habitacles des véhicules, sont le plus souvent garnis d'un revêtement en tissu qui a une fonction principalement esthétique.

Ce revêtement peut être simplement fixé par collage sur tout ou partie de la pièce.

Mais, lorsque cette pièce est réalisée en matière plastique, on préfère solidariser le revêtement à la pièce directement par surmoulage, ce qui est avantageux en termes de main d'oeuvre du fait qu'on élimine ainsi l'opération de collage qui est longue et délicate.

L'exécution d'un tel surmoulage nécessite cependant des précautions particulières pour éviter que le revêtement ne soit détérioré lors de l'opération de moulage proprement dite.

En particulier, il faut veiller à ce que le revêtement ne se froisse pas, ne se déchire pas et ne soit pas excessivement comprimé dans le moule, ce qui pourrait lui donner un aspect lustré indésirable.

On a déjà proposé des procédés de surmoulage qui permettent de réaliser des pièces composites ne présentant pas de tels défauts.

Mais, si ces procédés permettent de surmouler un revêtement sans l'endommager, il n'en reste pas moins que les pièces composites ainsi obtenues sont recouvertes par le revêtement sur la totalité de leur face visible, de sorte qu'il est impossible, selon cette technique connue, de mouler une pièce dont une partie seulement de la face visible soit recouverte d'un revêtement.

C'est pourquoi, pour obtenir une pièce partiellement revêtue, il est nécessaire de procéder en deux temps. Dans un premier temps, on réalise séparément une pièce revêtue appelée médaillon qui correspond à la partie revêtue de la pièce que l'on désire réaliser, et une pièce non revêtue appelée support, qui correspond à la partie non revêtue de la pièce que l'on désire réaliser. Dans un second temps, le médaillon et le support ainsi réalisés séparément sont assemblés l'un avec l'autre par des moyens de fixation rapportés conventionnels pour constituer la pièce partiellement revêtue.

Cette technique présente l'inconvénient d'impliquer un grand nombre de manipulations et de nécessiter des moyens de fixation complémentaires entre le médaillon et le support.

La présente invention vise à fournir un procédé qui permet de réaliser une pièce composite en matière plastique revêtue qui ne nécessite pas de moyens de fixation rapportés pour être solidarisée à une autre pièce en matière plastique non revêtue avec laquelle elle peut réaliser une pièce finale d'un seul tenant comportant un revêtement sur une partie seulement de sa surface.

La présente invention a pour objet un procédé de réalisation d'une pièce composite en matière plastique comportant un revêtement sur une de ses faces, caractérisé par le fait que l'on place, entre les deux parties d'un moule ouvert, une feuille de revêtement et de la matière plastique à l'état fondu d'un côté de cette feuille de revêtement en quantité suffisante pour remplir le moule, sur la feuille de revêtement ou sur l'une des parties du moule, alors que ce dernier est ouvert, puis que l'on ferme le moule, et que la partie du moule située en face de la feuille de revêtement comporte des cavités telles que, lorsque la matière plastique remplit le moule, la feuille de revêtement se déchire au droit desdites cavités en y laissant pénétrer la matière plastique fondue, laquelle se solidifie dans lesdites cavités en formant des protubérances qui traversent la feuille de revêtement.

En d'autres termes, le procédé selon l'invention consiste à provoquer des perforations dans la feuille de revêtement, de préférence à sa périphérie, de manière à former par exemple des plots ou un rebord continu, sur lesquels une autre pièce peut s'arrimer pour former, avec la pièce composite revêtue, un ensemble d'un seul tenant constituant une pièce en matière plastique munie d'un revêtement sur une partie seulement de sa surface.

Conformément à l'invention, on place la matière plastique dans le moule ouvert, de manière que, lors de la fermeture du moule, elle remplisse le moule tout en plaquant la feuille de revêtement contre la partie du moule comportant des cavités.

On a constaté que ce mode de remplissage du moule permet de préserver la feuille de revêtement qui ne subit l'effet de la matière plastique sous pression qu'au droit des cavités où elle se déchire, alors que des essais ont révélé que la méthode d'injection traditionnelle, qui consiste à envoyer la matière plastique sous presion à travers un ou plusieurs canaux d'injection dans le moule fermé, entraîne des défauts de surface tels que des plissements voire des déchirements de la feuille de revêtement.

A posteriori, on explique ce phénomène par le fait que la matière plastique est déjà partiellement étalée avant la fermeture du moule, par le fait que la fermeture du moule provoque le fluage de la matière plastique dans des conditions moins rigoureuses, en générant notamment un gradient de pression moins accentué au sein de la matière plastique, et par le fait qu'une pellicule de matière plastique refroidie se forme inévitablement sur la masse de matière plastique avant la fermeture du moule, pellicule qui protège la feuille de revêtement à la fois thermiquement et mécaniquement en évitant que, lors du fluage, les couches inférieures de matière plastique entraînent la feuille de revêtement dans leur déplacement.

Comme indiqué ci-dessus, les cavités sont de préférence situées à la périphérie de l'empreinte du moule de manière à ce que la pièce composite ainsi réalisée puisse être solidarisée, sans moyens de fixation rapportés, à une autre pièce qui l'entoure pour former avec elle une pièce d'un seul tenant revêtue dans sa partie centrale.

Dans un mode de mise en oeuvre préféré de l'invention, on surmoule ladite autre pièce directement sur les protubérances de la pièce composite revêtue de manière à obtenir ainsi une pièce en matière plastique d'un seul tenant, comportant un revêtement sur une partie de sa surface, et ce, sans opération de fixation de la pièce revêtue sur ladite autre pièce.

Dans une variante préférée de ce mode de mise en oeuvre, on utilise la même matière plastique pour réaliser, d'une part la pièce composite revêtue, et d'autre part l'autre pièce, de manière à provoquer le ressoudage de la matière plastique injectée pour surmouler l'autre pièce avec la matière plastique constituant les protubérances de la pièce composite revêtue.

Dans le même but, on peut également utiliser deux matières plastiques compatibles entre elles.

Dans une autre variante, on donne aux protubérances formées sur la pièce composite revêtue une forme appropriée pour retenir mécaniquement une masse de matière plastique surmoulée sur lesdites protubérances.

De même, on peut ajuster l'état de surface des protubérances de manière à améliorer l'adhérence de la matière plastique surmoulée sur lesdites protubérances.

Avantageusement, l'étape de moulage qui consiste à réaliser la pièce composite revêtue, et l'étape de surmoulage qui consiste à réaliser l'autre pièce, sont séparées par un temps suffisamment long pour permettre le durcissement de la pièce revêtue, mais suffisamment court pour que les protubérances réalisées en saillie de la feuille de revêtement soient encore assez chaudes pour se souder dans de bonnes conditions à la matière plastique injectée pour réaliser l'autre pièce.

Selon l'invention, on peut utiliser comme revêtement une feuille de velours, de PVC, un tissu, un non-tissé etc ... .

La feuille de revêtement peut notamment comporter une couche de mousse sur son envers, de manière à constituer, après moulage, un revêtement moelleux.

La présente invention vise également à fournir des moules pour la mise en oeuvre du procédé décrit ci-dessus.

Dans ce but, la présente invention a pour objet un moule à plan de joint positif en deux parties pour la réalisation d'une pièce composite en matière plastique comportant un revêtement sur une de ses faces, moule qui est caractérisé par le fait que l'une de ses parties comporte, de préférence à la périphérie de son empreinte, au moins une cavité dont la forme et les dimensions sont déterminées pour qu'une feuille de revêtement appliquée contre cette partie de moule se déchire au droit de cette cavité lorsqu'elle est soumise à la pression d'une matière plastique remplissant le moule.

La forme de la ou des cavités doit être déterminée en fonction de différents paramètres, et notamment en fonction de l'élasticité du revêtement utilisé et de son état de tension au droit de la cavité, cet état de tension étant déterminé par la forme du moule et par la manière dont on immobilise la feuille de revêtement lors du moulage.

Dans un mode de réalisation particulièrement avantageux, chaque cavité comporte des bords qui s'opposent au glissement de la feuille de revêtement de manière à favoriser la rupture de la feuille de revêtement.

Ainsi, l'action de la matière plastique est concentrée sur la seule portion de la feuille de revêtement qui se trouve au droit de la cavité.

Les bords de chaque cavité peuvent par exemple comporter à cet effet des arêtes vives sur lesquelles la feuille de revêtement glisse avec difficultés.

Dans le même but, on peut prévoir des aspérités sur les bords de chaque cavité, lesquelles aspérités peuvent d'ailleurs se présenter sous la forme de picots qui amorcent la rupture de la feuille de revêtement.

Dans une variante particulière de ce mode de réalisation, on prévoit des lames sur l'une des parties du moule, au voisinage des cavités et dans la zone de cette partie du moule qui s'étend parallèlement à la direction de fermeture du moule et vient coulisser contre une zone correspondante de l'autre partie du moule, lors de la fermeture de ce dernier.

Ainsi, lorsque le moule est refermé sur la feuille de revêtement, cette dernière est pincée entre les zones de coulissement des deux parties du moule, qui ceinturent l'empreinte du moule, et des découpes de la feuille de revêtement sont obtenues aux emplacements des lames.

De cette manière, on peut réaliser autant d'incisions que nécessaire au voisinage des cavités, de manière à permettre à la matière plastique de traverser la feuille de revêtement pour remplir les cavités et former les protubérances selon l'invention.

La présente invention a également pour objet un moule pour la réalisation d'une pièce composite en matière plastique comportant un revêtement sur une partie de sa surface, qui est caractérisé par le fait qu'il comporte des parties mobiles aptes à prendre une première position dans laquelle le moule se présente en deux parties séparées par un plan de joint positif, l'une des parties du moule comportant au moins une cavité dont la forme et les dimensions sont déterminées pour qu'une feuille de revêtement appliquée contre cette partie du moule se déchire au droit de cette cavité lorsqu'elle est soumise à la pression d'une matière plastique remplissant le moule, de sorte que la matière plastique remplit cette cavité et forme en durcissant une protubérance en saillie de la feuille de revêtement, et une seconde position dans laquelle le moule définit une empreinte d'injection qui recouvre lesdites protubérances.

La présente invention a également pour objet les pièces composites obtenues par mise en oeuvre du procédé décrit ci-dessus.

Dans le but de mieux faire comprendre l'invention, on va en décrire maintenant deux modes de réalisation donnés à titre d'exemples non limitatifs en référence au dessin annexé dans lequel :
- la figure 1 est une vue en perspective d'un panneau, par exemple d'une portière de véhicule automobile, comportant un médaillon revêtu dans sa partie centrale,
- les figures 2a à 2g sont des vues en coupe de parties de deux moules permettant la réalisation du panneau de la figure 1, localisées à l'endroit correspondant au plan de coupe II-II de la figure 1,
- la figure 3 est une vue en coupe d'un autre moule permettant la réalisation d'un autre panneau partiellement revêtu,
- les figures 4a à 4d sont des vues à plus grande échelle de la partie IV de la figure 3,
- La figure 5 est une vue en coupe analogue à celles des figures 2 et 4 représentant une partie d'un moule muni de lames de découpe de la feuille de revêtement,
- la figure 6 est une vue en coupe selon VI-VI de la figure 5,
- la figure 7 est une vue analogue à celle de la figure 5 représentant une variante du même moule, et
- la figure 8 est une vue en coupe selon VIII-VIII de la figure 7.

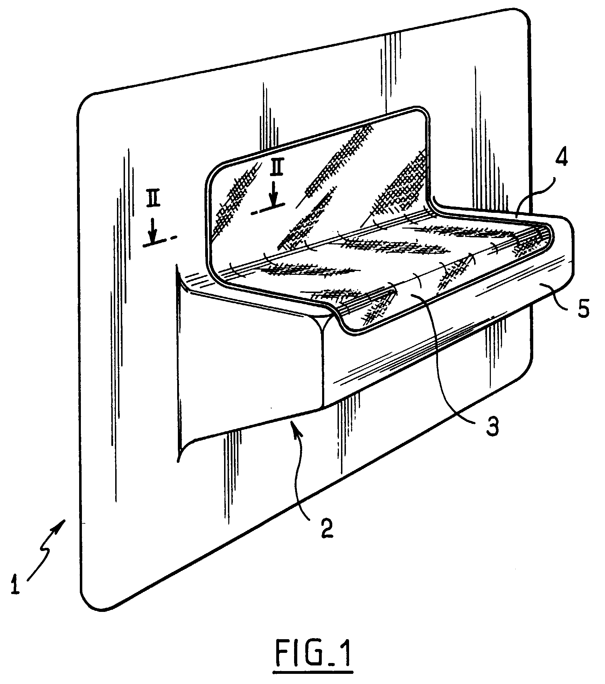

La figure 1 représente de façon très schématique un panneau intérieur 1 de portière de véhicule automobile.

Ce panneau, qui est réalisé en matière plastique, comporte un accoudoir 2 garni d'un revêtement 3 sur sa face supérieure 4 et sur une partie de sa face latérale 5, ce revêtement s'étendant également dans la partie du panneau située au-dessus de l'accoudoir.

La partie revêtue est désignée médaillon dans la suite de la description.

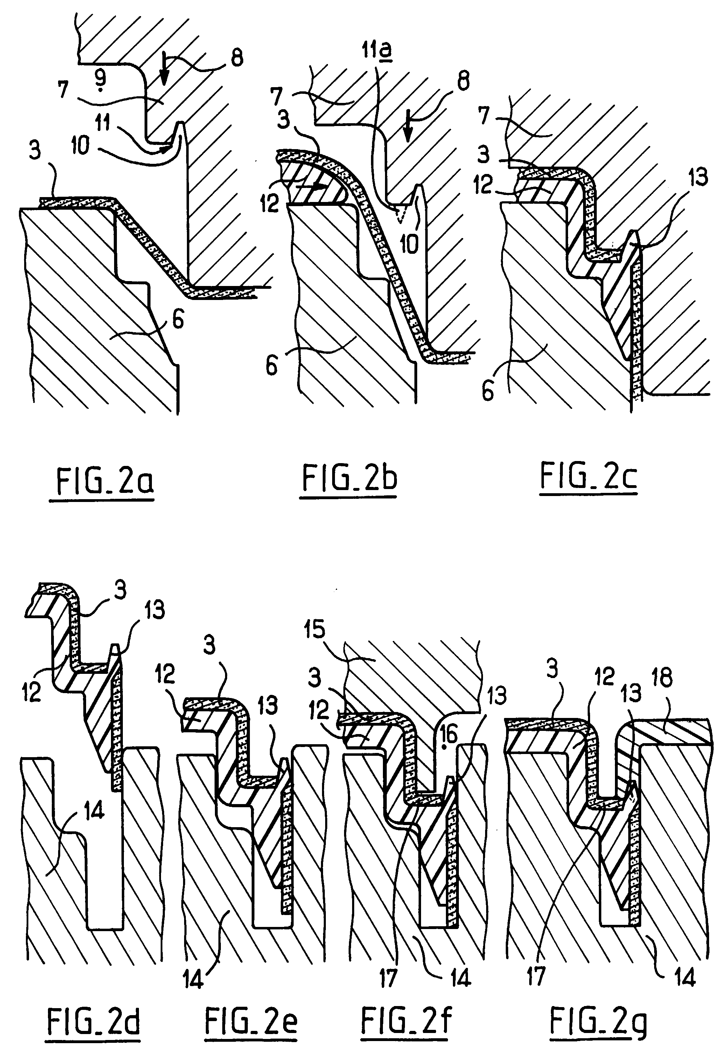

Un tel panneau partiellement revêtu peut être obtenu grâce aux moules représentés aux figures 2a à 2g.

Le premier moule, qui est représenté aux figures 2a à 2c, se compose d'une partie inférieure fixe 6 et d'une partie supérieure mobile 7, comme indiqué par la flèche 8 sur les figures 2a et 2b.

Ce moule est un moule à plan de joint positif, c'est-à-dire qu'il comporte une chambre de compression qui permet d'assurer l'étanchéité à la périphérie de son empreinte avant la fermeture totale du moule.

Conformément à l'invention, on réalise d'abord le médaillon en plaçant une feuille de revêtement 3, par exemple en PVC, entre les deux parties du moule ouvert, comme représenté à la figure 2a.

La partie supérieure 7 du moule présente, à la périphérie de son empreinte 9, une pluralité de cavités 10 en forme de plots, dont les dimensions sont telles que la feuille de revêtement 3 ne peut pas se plaquer contre le fond de chaque cavité sans se déchirer.

Pour faciliter la rupture de la feuille de revêtement 3 au droit des cavités 10, on prévoit une arête vive 11 à l'embouchure de chaque cavité, arête vive qui s'oppose au glissement de la feuille de revêtement et accroît ainsi les contraintes subies par la feuille de revêtement dans sa partie située en regard de cette cavité.

Pour favoriser la rupture de la feuille de revêtement 3, on peut également prévoir une arête vive en saillie 11a, représentée en traits interrompus sur la figure 2b.

Une autre possibilité visant à provoquer la rupture de la feuille de revêtement consiste à fragiliser cette dernière aux endroits appropriés, en la prédécoupant ou en la perçant.

Toutefois, l'inconvénient de cette solution réside dans l'obligation de positionner la feuille de revêtement de façon très précise, par rapport au moule, de manière à ce que ses zones fragilisées se situent au droit des cavités.

On injecte ensuite dans le moule, entre la feuille de revêtement 3 et la partie fixe 6 du moule, une matière plastique 12 à l'état fondu, en quantité suffisante pour que, lors de la fermeture du moule, cette matière plastique flue en remplissant toute l'empreinte du moule. On ferme alors le moule comme illustré à la figure 2b.

Il faut noter que le fait d'injecter la matière plastique alors que le moule est ouvert revient à déposer la matière plastique d'un côté du moule par extrusion, ce qui n'est en aucune manière assimilable à une injection traditionnelle qui consiste à envoyer la matière plastique sous pression pour remplir le moule.

Lors de la fermeture du moule, la feuille de revêtement est pincée entre la partie supérieure et la partie inférieure du moule. Elle est ainsi maintenue en position en étant tendue notamment dans sa partie périphérique voisine des cavités 10.

Comme on le voit sur la figure 2c, le fluage de la matière plastique 12, qui remplit toute la cavité du moule en plaquant la feuille de revêtement 3, sans l'endommager, contre la partie supérieure 7 du moule provoque le déchirement de cette feuille de revêtement 3 au droit des cavités 10 précédemment décrites qui sont disposées à la périphérie de l'empreinte de la partie supérieure du moule.

La dimension des cavités 10 est déterminée de manière appropriée en fonction notamment de la nature du revêtement utilisé, et de son état de tension au voisinage de cette cavité.

On voit clairement, sur la figure 2c, que la matière plastique 12 a transpercé la feuille de revêtement 3 à l'embouchure de la cavité 10 et à rempli cette dernière en formant une protubérance en forme de plot 13 en saillie de la face revêtue du médaillon ainsi réalisé.

Après refroidissement au moins partiel du médaillon, on extrait celui-ci du moule pour le placer dans un second moule qui est représenté aux figures 2d à 2g.

Ce second moule comporte une partie inférieure fixe 14, dont l'empreinte correspond sensiblement à la forme de la face non revêtue du médaillon, et une partie supérieure 15 visible sur la figure 2f, apte à se refermer sur le médaillon en emprisonnant ce dernier, en laissant libre une cavité 16 qui vient recouvrir le bord périphérique 17 du médaillon et notamment les plots 13 en saillie de la feuille de revêtement 3.

Une fois le moule fermé, une matière plastique 18 est injectée dans son empreinte 16 et vient recouvrir les plots 13 comme indiqué sur la figure 2g.

De préférence, et contrairement à l'étape précédente de réalisation du médaillon, l'injection de la seconde matière plastique 18 s'effectue à moule fermé, de manière à ce que la partie supérieure 15 du moule soit convenablement appuyée sur le bord 17 du médaillon au moment où la matière plastique injectée remplit la cavité 16.

Avantageusement, on utilise la même matière plastique pour réaliser le médaillon et pour injecter la partie du panneau complémentaire au médaillon, de manière à ce que les plots 13 se ressoudent sans difficulté avec la seconde quantité de matière plastique 14 injectée.

On obtient ainsi un panneau d'un seul tenant tel que celui de la figure 1.

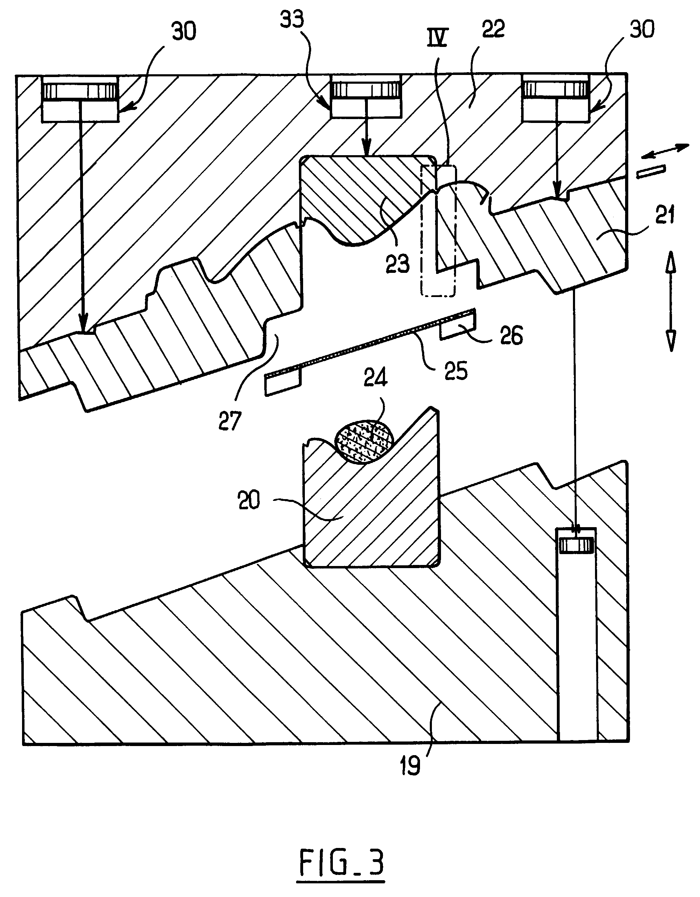

La figure 3 représente un autre moule permettant la réalisation d'un autre panneau partiellement revêtu par mise en oeuvre du procédé selon l'invention.

Ce moule comprend une partie inférieure fixe 19 dans laquelle est immobilisé un bloc amovible 20 qui peut être considéré comme faisant partie intégrante de la partie inférieure du moule, ainsi qu'une partie supérieure qui est divisée en un bloc périphérique 21, un bloc supérieur 22 et un bloc central 23.

Conformément à l'invention, on réalise d'abord le médaillon de la pièce.

A cet effet, on place une quantité appropriée de matière plastique 24 dans l'empreinte délimitée par le bloc 20 de la partie inférieure 19 du moule, et l'on dispose une feuille de revêtement 25 entre la partie inférieure et la partie supérieure du moule ouvert.

La feuille de revêtement 25 est fixée à un cadre 26 qui prend place dans une gorge 27 réservée à cet effet à la partie supérieure du moule, lorsque ce dernier est fermé.

Le cadre 26, qui peut être par exemple en bois, en matière plastique ou en métal, maintient la feuille de revêtement 25 à la fois lors de sa mise en place dans le moule et lors de la fermeture du moule, en laissant la feuille de revêtement 25 glisser d'une manière plus ou moins importante suivant l'endroit considéré du moule.

Par exemple, dans les parties à faible relief du moule, le cadre 26 retient fermement la feuille de revêtement 25 pour qu'elle se tende parfaitement sans se plisser, et dans les parties à fort relief du moule, le cadre 26 libère la feuille de revêtement 25 pour qu'elle puisse s'appliquer convenablement dans le moule, sans se tendre de manière trop importante, ce qui pourrait entraîner son déchirement.

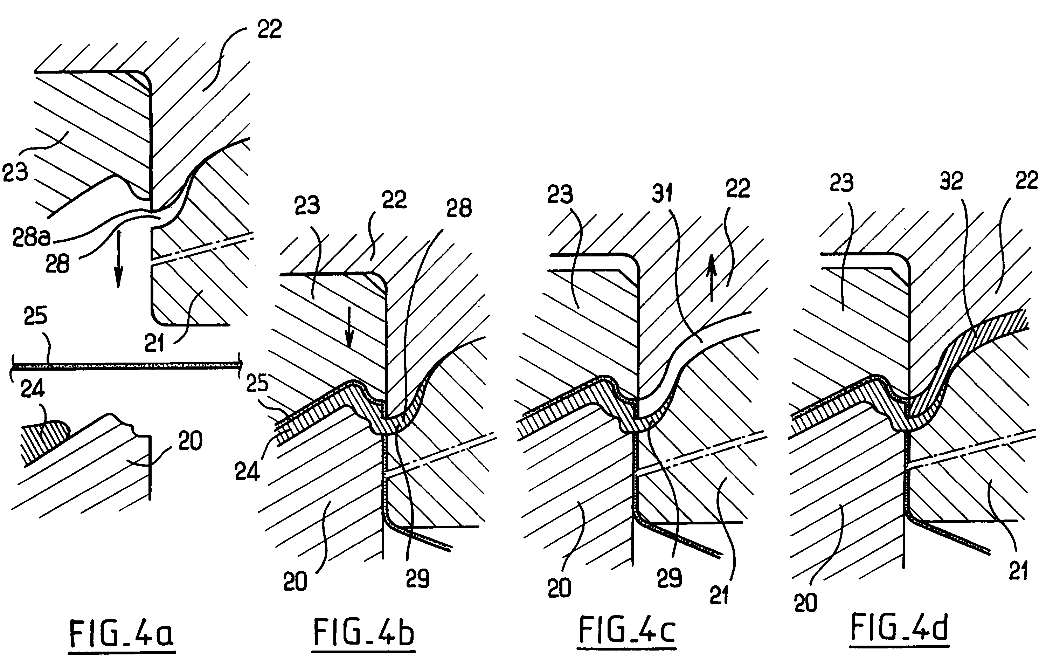

Sur la figure 4a, on voit que la partie supérieure du moule délimite une cavité continue périphérique 28 entre son bloc périphérique 21 et son bloc supérieur 22.

Cette cavité 28 comporte une arête vive 28a qui favorise la rupture de la feuille de revêtement au moment où elle subit la pression de la matière plastique.

En fermant le moule, on provoque le fluage de la matière plastique 24 qui remplit l'espace compris entre les deux blocs centraux 20 et 23.

Comme on le voit sur la figure 4b, la matière plastique transperce la feuille de revêtement au droit de la cavité 28 et remplit également cette dernière, sans pour autant endommager la feuille de revêtement par ailleurs.

De ce fait, le médaillon ainsi réalisé comporte à sa périphérie une protubérance en forme de rebord continu 29, en saillie de la feuille de revêtement.

La matière plastique, en traversant la feuille de revêtement, peut découper cette dernière sur toute la périphérie de l'empreinte, ce qui, non seulement permet d'obtenir un rebord continu sur lequel on peut ultérieurement arrimer une pièce en matière plastique, sans moyens de fixation rapportés, mais également évite une opération de reprise qui consisterait à découper la feuille de revêtement dépassant du bord du médaillon dans l'hypothèse où une telle découpe se révèlerait nécessaire, par exemple pour des raisons d'étanchéité du panneau, la feuille de revêtement pouvant véhiculer une certaine humidité d'une face à l'autre du panneau par effet de mèche.

Une fois le médaillon au moins partiellement durci, on actionne les vérins 30, ce qui provoque le déplacement vers le haut du bloc supérieur 22 de la partie supérieure du moule, le bloc périphérique 21 demeurant dans sa position initiale, comme le bloc central 23 qui est poussé par le vérin 33.

Ce déplacement relatif des blocs de la partie supérieure du moule provoque la formation d'une nouvelle empreinte 31 qui s'étend sur toute la périphérie du médaillon, entre le bloc périphérique 21 et le bloc supérieur 22, et qui recouvre à la fois le bord de la feuille de revêtement 25 et le rebord continu 29.

Cette empreinte 31 correspond à la partie non revêtue du panneau que l'on désire réaliser.

On injecte ensuite une quantité appropriée de matière plastique 32 dans cette nouvelle empreinte.

Il se produit un ressoudage de la matière plastique injectée sur le rebord 29 du médaillon, ce qui permet de solidariser le médaillon au reste du panneau.

Une fois la matière plastique au moins partiellement durcie, il ne reste plus qu'à démouler le panneau en séparant le bloc supérieur 22 de la partie supérieure du moule, et le bloc périphérique 21 de cette même partie supérieure du moule.

Une fois la pièce éjectée, la partie supérieure du moule peut être reconstituée en actionnant les vérins 30 et 33, puis séparée de la partie inférieure du moule de manière à dégager le cadre 26.

Le moulage d'un nouveau panneau peut alors être effectué.

On comprend que ce moule présente l'avantage de permettre la réalisation d'un panneau partiellement revêtu sans manipulation du médaillon.

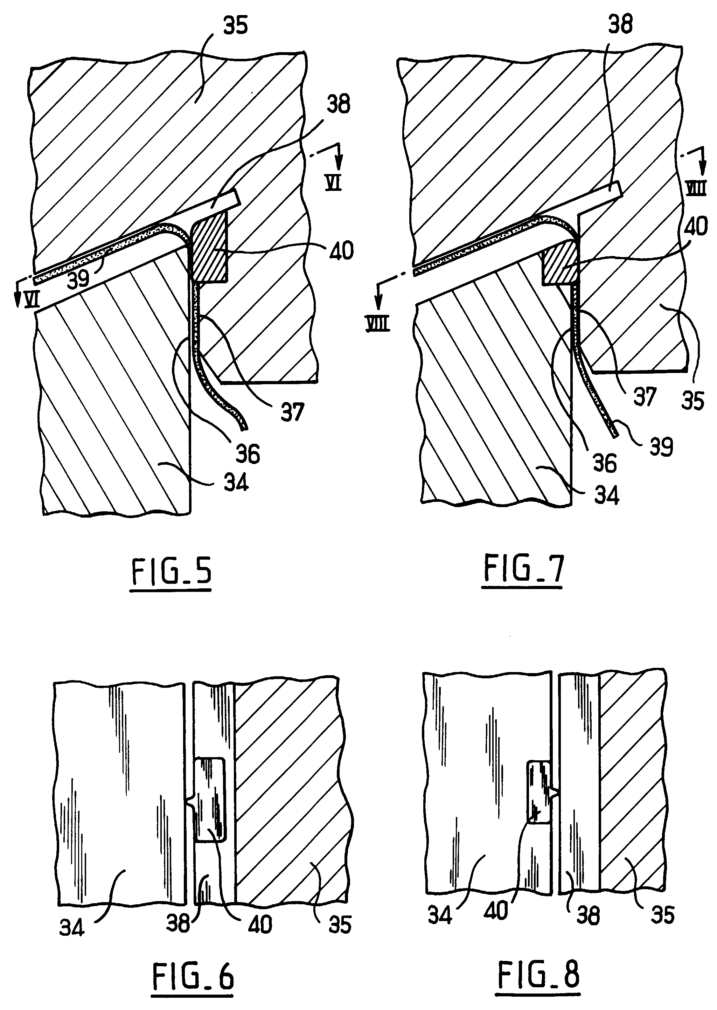

Sur les figures 5 à 8, on a représenté deux variantes d'un moule muni de lames de découpe de la feuille de revêtement.

Le moule comporte une partie inférieure 34 et une partie supérieure 35.

Chaque partie du moule comporte une zone de coulissement 36, respectivement 37, qui s'étend perpendiculairement à la direction de fermeture du moule et ceinture l'empreinte de ce dernier.

A la manière connue dans un tel moule à plan de joint positif, les zones de coulissement de chaque partie du moule coulissent l'une contre l'autre lors de la fermeture du moule et assurent l'étanchéité de son empreinte, avant la fermeture totale du moule.

Selon l'invention, une cavité 38 est ménagée dans la partie supérieure 35 du moule, contre laquelle la feuille de revêtement 39 s'applique lors du moulage de la pièce, tandis que la matière plastique s'écoule entre la feuille de revêtement 39 et la partie inférieure 34 du moule.

Une lame de découpe 40 est assujettie à la partie supérieure 35 du moule dans l'exemple représenté aux figures 5 et 6 et à la partie inférieure du moule dans l'exemple représenté aux figures 7 et 8. Dans les deux exemples, la lame 40 se situe dans la zone de coulissement 36, 37 de la partie correspondante du moule, de manière à pincer la feuille de revêtement 39, lors de la fermeture du moule, contre la zone de coulissement de l'autre partie du moule.

Il en résulte que, lors de la fermeture du moule, la feuille de revêtement est découpée au voisinage de la cavité 38, ce qui permet la pénétration de la matière plastique dans ladite cavité pour y former une protubérance.

Les étapes ultérieures du procédé permettant de réaliser une pièce complète sont les mêmes que celles précédemment décrites.

Il est bien entendu que les modes de réalisation qui viennent d'être décrits ne présentent aucun caractère limitatif et qu'ils pourront recevoir toutes modifications désirables sans sortir pour cela du cadre de l'invention.

En particulier, dans les modes de réalisation décrits ci-dessus, la partie du panneau complémentaire au médaillon n'est solidarisée à ce dernier que par sa face visible, en saillie de laquelle se trouvent les protubérances, sous forme de plots ou d'un rebord continu.

Toutefois, on pourrait également prévoir que la matière plastique injectée pour surmouler cette partie complémentaire du panneau sur le médaillon enrobe complètement le bord dudit médaillon, aussi bien sur sa face visible comportant les protubérances que sur son envers, de sorte que la matière plastique de la partie complémentaire du panneau et celle du médaillon se raccordent de façon continue sur l'envers du panneau en assurant ainsi l'étanchéité de ce dernier entre son envers et son endroit.

Cet enrobage complet du bord du médaillon nécessite naturellement que la feuille de revêtement soit découpée le long du bord du médaillon, ce qui peut être obtenu par une opération de reprise ou, selon un mode de réalisation de l'invention, par déchirure continue provoquée par la matière plastique au droit d'une cavité continue périphérique à l'empreinte du moule du médaillon.

## Revendications

1. Procédé de réalisation d'une pièce composite en matière plastique comportant un revêtement sur une de ses faces, caractérisé par le fait que l'on place, entre les deux parties (6,7;20,23) d'un moule ouvert, une feuille de revêtement (3;25) et de la matière plastique à l'état fondu (12;24) d'un côté de cette feuille de revêtement en quantité suffisante pour remplir le moule, sur la feuille de revêtement (3;25) ou sur l'une des parties (6,7;20,23) du moule, alors que ce dernier est ouvert, puis que l'on ferme le moule, et que la partie du moule (7;23) située en face de la feuille de revêtement comporte des cavités (10;28) telles que, lorsque la matière plastique remplit le moule, la feuille de revêtement se déchire au droit desdites cavités en y laissant pénétrer la matière plastique fondue, laquelle se solidifie dans lesdites cavités en formant des protubérances (13;29) qui traversent la feuille de revêtement.

2. Procédé selon la revendication 1, caractérisé par le fait que les cavités (10;28) sont situées à la périphérie de l'empreinte du moule.

3. Procédé selon la revendication 1, caractérisé par le fait que l'on surmoule une autre pièce (18) directement sur les protubérances de la pièce composite revêtue (3,12).

4. Procédé selon la revendication 3, caractérisé par le fait que l'on utilise la même matière plastique pour réaliser, d'une part la pièce composite revêtue (3,12), et d'autre part ladite autre pièce (18).

5. Moule à plan de joint positif en deux parties pour la réalisation d'une pièce composite en matière plastique comportant un revêtement sur une de ses faces, caractérisé par le fait que l'une (7;21) des parties du moule comporte au moins une cavité (10;28) dont la forme et les dimensions sont déterminées pour qu'une feuille de revêtement (3;25), appliquée contre cette partie du moule, se déchire au droit de cette cavité lorsqu'elle est soumise à la pression d'une matière plastique (12;24) remplissant le moule.

6. Moule selon la revendication 5, caractérisé par le fait que chaque cavité (10;28) comporte des bords (11;28a) qui s'opposent au glissement de la feuille de revêtement (3;25).

7. Moule selon la revendication 6, caractérisé par le fait que les bords de chaque cavité (10;28) comportent des aspérités, par exemple sous forme de picots.

8. Moule selon la revendication 5, caractérisé par le fait qu'il comporte, sur une de ses parties (35) au voisinage de sa cavité (38) et dans la zone de coulissement (37) de ladite partie, une lame de découpe (40) qui, lors de la fermeture du moule, pince la feuille de revêtement (39) contre la zone de coulissement (36) de l'autre partie (34) du moule et la découpe.

9. Moule pour la réalisation d'une pièce composite en matière plastique comportant un revêtement sur une partie de sa surface, caractérisé par le fait qu'il comporte des parties mobiles (21,22,23) aptes à prendre une première position dans laquelle le moule se présente en deux parties séparées par un plan de joint positif, l'une des parties du moule comportant, au moins une cavité (28) dont la forme et les dimensions sont déterminées pour qu'une feuille de revêtement (25), appliquée contre cette partie du moule, se déchire au droit de cette cavité lorsqu'elle est soumise à la pression d'une matière plastique (24) remplissant le moule, de sorte que la matière plastique remplit cette cavité et forme en durcissant une protubérance (29) en saillie de la feuille de revêtement, et une seconde position dans laquelle le moule définit une empreinte d'injection (31) qui recouvre lesdites protubérances (29).

10. Pièce composite obtenue par mise en oeuvre du procédé selon l'une quelconque des revendication 1 à 4.
